# EUROPEAN PATENT APPLICATION

(11) **EP 2 597 877 A2**
(43) Date of publication of application: **29.05.2013**
(21) Application number: 12193369.1
(22) Date of filing: 20.11.2012
(51) Int. Cl.: H04N 13/00

(54) **Supplementary information coding apparatus and method for 3D video**

(30) Priority: 22.11.2011 KR 20110122058; 25.04.2012 KR 20120043506
(71) Applicant: Samsung Electronics Co., Ltd, Gyeonggi-do 443-742 (KR)
(72) Inventor: Oh, Kwan Jung, 446-712 Gyeonggi-di (KR); Lee, Jae Joon, 446-712 Gyeonggi-do (KR); Park, Du Sik, 446-712 Gyeonggi-do (KR); Baik, Aron, 446-712 Gyeonggi-do (KR); Lee, Jin Young, 446-712 Gyeonggi-do (KR)
(74) Representative: Land, Addick Adrianus Gosling

(57) **Abstract**

An encoding apparatus and method for encoding supplementary information of a three-dimensional (3D) video may determine that an updated parameter among parameters included in camera information and parameters included in depth range information is a parameter to be encoded. The encoding apparatus may generate update information including information about the updated parameter and information about a parameter not updated, perform floating-point conversion of the updated parameter, and encode the update information and the floating-point converted parameter. A decoding apparatus and method for decoding supplementary information of a 3D video may receive and decode encoded supplementary information by determining whether the encoded supplementary information includes update information. When update information is included, the decoding apparatus may classifying the decoded supplementary information, perform floating-point inverse conversion of the updated parameter, and store latest supplementary information in a storage.

## Description

This application claims the priority benefit of Korean Patent Application No. 10-2011-0122058, filed on November 22, 2011, and Korean Patent Application No. 10-2012-0043506, filed on April 25, 2012, in the Korean Intellectual Property Office, the disclosures of which are incorporated herein by reference

The following description of one or more embodiments relates to encoding and decoding of a three-dimensional (3D) video, and more particularly, to an apparatus and method for effectively encoding and decoding supplementary information of a 3D video.

An international standard about a three-dimensional (3D) video image that is currently being prepared by a motion pictures experts group (MPEG) relates to 3D video coding (3DVC). Research of 3DVC has been conducted on compression of a multi-view color image and a multi-view depth image and a rendering technology using the compression, in order to provide a 3D video service using the multi-view color image and the multi-view depth image.

To provide the 3D video service using the multi-view color image and the multi-view depth image, supplementary information may include information used to generate a relationship between the multi-view color image and the multi-view depth image, and to generate a 3D video, may need to be defined. Also, there is a need for an encoding and decoding apparatus and method to efficiently transmit supplementary information.

According to an aspect of one or more embodiments, there is provided an encoding apparatus for encoding supplementary information of a three-dimensional (3D) video which may be acquired using a plurality of cameras, the encoding apparatus including: a camera information receiving unit to receive camera information; a depth range receiving unit to receive depth range information; an encoding determining unit to determine that an updated parameter among parameters included in the camera information and parameters included in the depth range information is a parameter to be encoded, and to generate update information including information about the updated parameter and information about a parameter not updated; and an encoding unit to encode the update information and the parameter to be encoded.

The camera information may include at least one of an intrinsic parameter, a rotation parameter, or a translation parameter, and the depth range information may include a maximum depth value and a minimum depth value.

The encoding apparatus may further include a floating-point converting unit to perform floating-point conversion of the parameter to be encoded. The encoding unit may encode the update information and the floating-point converted parameter.

In the case of transmitting a first frame, the encoding determining unit may determine that all of the parameters included in the camera information and all of the parameters included in the depth range information are parameters to be encoded. In the case of transmitting the first frame, the encoding unit may encode the parameter to be encoded without using the update information.

In the case of transmitting a frame at predetermined intervals in order to provide a random access service, the encoding determining unit may determine that all of the parameters included in the camera information and all of the parameters included in the depth range information are parameters to be encoded. In the case of transmitting the frame at the predetermined intervals, the encoding unit may encode the parameter to be encoded without using the update information.

The encoding determining unit may determine whether an update is performed with respect to each of the parameters included in the camera information and each of the parameters included in the depth range information, to thereby determine whether encoding is required with respect to each of the parameters.

The encoding determining unit may generate the update information indicating whether an update is performed for each of the parameters included in the camera information and for each of the parameters included in the depth range information.

The encoding determining unit may group, into predetermined groups, the parameters included in the camera information and the parameters included in the depth range information, may determine whether an update is performed with respect to at least one of parameters included in the groups, and thereby may determine that there is a need to encode all of the parameters included in a group which includes at least one updated parameter.

The encoding determining unit may generate the update information indicating whether an update is performed for each of the groups.

The floating-point converting unit may convert the parameter to be encoded to a sign, a mantissa, an exponent, and a precision.

The encoding apparatus may further include: a focal length receiving unit to receive focal length information; and a supplemental enhancement information (SEI) encoding determining unit to determine that encoding is required when the focal length information is updated. The encoding unit may encode the updated focal length information.

In the case of transmitting a first frame, the SEI encoding determining unit may determine that encoding of the focal length information is required. In the case of transmitting the first frame, the encoding unit may encode the focal length information.

In the case of transmitting a frame at predetermined intervals in order to provide a random access service, the SEI encoding determining unit may determine that encoding of the focal length information is required. In the case of transmitting the frame at the predetermined intervals, the encoding unit may encode the focal length information.

According to another aspect of one or more embodiments, there is provided a decoding apparatus for decoding supplementary information of a 3D video, the decoding apparatus including: a decoding unit to decode encoded supplementary information; a supplementary information classifying unit to classify the decoded supplementary information as an updated parameter included in camera information or as an updated parameter included in depth range information, when update information is included in the encoded supplementary information; a storage unit to store latest supplementary information; and a supplementary information reconfiguring unit to store the updated parameter in the storage unit, and to determine a parameter value for a parameter which is not updated. The parameter value may be based on the latest supplementary information stored in the storage unit or may be obtained using a default value when the latest supplementary information stored in the storage unit does not include a parameter value for a parameter corresponding to the parameter which is not updated.

The decoding apparatus may further include a floating-point inverse converting unit to perform floating-point inverse conversion of the updated parameter. The supplementary information reconfiguring unit may store the floating-point inversely converted parameter in the storage unit.

When the update information is not included in the encoded supplementary information, the supplementary information classifying unit may classify the decoded supplementary information into parameters included in the camera information and parameters included in the depth range information. The supplementary information reconfiguring unit may store all of the classified parameters in the storage unit as the latest supplementary information.

When focal length information is included in the encoded supplementary information, the supplementary information classifying unit may classify the focal length information, and the supplementary information reconfiguring unit may store the focal length information in the storage unit.

According to still another aspect of one or more embodiments, there is provided a method of encoding supplementary information of a 3D video, the method including: receiving camera information and depth range information; determining that an updated parameter among parameters included in the camera information and parameters included in the depth range information is a parameter to be encoded; generating update information including information about the updated parameter and information about a parameter not updated; and encoding the update information and the parameter to be encoded.

The determining may include determining whether an update is performed with respect to each of the parameters included in the camera information and each of the parameters included in the depth range information, to thereby determine whether encoding is required with respect to each of the parameters.

The generating may include generating the update information indicating whether an update is performed for each of the parameters included in the camera information and each of the parameters included in the depth range information.

The determining may include grouping, into predetermined groups, the parameters included in the camera information and the parameters included in the depth range information, determining whether an update is performed with respect to at least one of parameters included in the groups, and thereby determining that there is a need to encode all of the parameters included in a group which includes at least one updated parameter.

The generating may include generating the update information indicating whether an update is performed for each of the groups.

According to yet another aspect of one or more embodiments, there is provided a method of decoding supplementary information of a 3D video, the method including: decoding encoded supplementary information; classifying the decoded supplementary information as an updated parameter included in camera information or as an updated parameter included in depth range information, when update information is included in the encoded supplementary information; and storing the updated parameter, and determining a parameter value for a parameter which is not updated. The parameter value for a parameter which is not updated may be determined based on stored latest supplementary information.

The method may further include: classifying the decoded supplementary information into parameters included in the camera information and parameters included in the depth range information when the update information is not included in the encoded supplementary information; and storing all of the classified parameters in the storage unit as the latest supplementary information.

According to another aspect of one or more embodiments, there is provided an encoding apparatus to encode supplementary information of a 3D video which may be acquired using a plurality of cameras, the encoding apparatus including: a camera information receiving unit to receive camera information; a depth range receiving unit to receive depth range information; an encoding determining unit to selectively determine whether to encode parameters included in the camera information and parameters included in the depth range information; and an encoding unit to selectively encode the parameters to be encoded.

The encoding determining unit may selectively determine to encode at least one parameter included in the camera information or at least one parameter included in the depth range information if a respective parameter included in the camera information or the depth range information is updated, and the encoding unit may selectively encode information of the updated parameter by omitting camera information according to positions and directions of the plurality of cameras.

The encoding determining unit may selectively determine to encode all of the parameters included in the camera information and the depth range information when a first frame among a plurality of frames is to be transmitted by the encoding apparatus, or when a frame to be transmitted by the encoding apparatus is a frame transmitted at predetermined intervals to provide a random access service.

The following embodiments propose a method of encoding and decoding supplementary information used to compress and display a 3D video. The proposed method of encoding and decoding supplementary information may determine whether an update is performed, and may encode and decode only updated supplementary information, thereby enabling supplementary information to be more effectively encoded and decoded.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates an example of supplementary information of a three-dimensional (3D) video according to an embodiment;
FIG. 2 illustrates a configuration of an encoding apparatus for encoding supplementary information of a 3D video according to an embodiment;
FIGS. 3A through 3C illustrate focal length information associated with a 3D screen according to an embodiment;
FIG. 4 illustrates a configuration of a decoding apparatus for decoding supplementary information of a 3D video according to an embodiment;
FIG. 5 illustrates a process of encoding supplementary information of a 3D video in an encoding apparatus according to an embodiment;
FIG. 6 illustrates a process of decoding supplementary information of a 3D video in a decoding apparatus according to an embodiment;
FIG. 7 illustrates a configuration of an encoding apparatus for encoding supplementary information based on information about positions and directions of cameras according to an embodiment;
FIGS. 8A through 8C illustrate examples of positions and directions of cameras according to an embodiment;
FIG. 9 illustrates a configuration of an encoding apparatus for adding information about another camera parameter used to encode a camera parameter according to an embodiment;
FIG. 10 illustrates a configuration of a decoding apparatus for decoding supplementary information based on information about positions and directions of cameras according to an embodiment;
FIG. 11 illustrates a configuration of a decoding apparatus for decoding a camera parameter based on information about another camera parameter according to an embodiment;
FIG. 12 illustrates an encoding method of encoding supplementary information based on information about positions and directions of cameras according to an embodiment;
FIG. 13 illustrates an encoding method of adding information about another camera parameter used to encode a camera parameter according to an embodiment;
FIG. 14 illustrates a decoding method of decoding supplementary information based on information about positions and directions of cameras according to an embodiment;
FIG. 15 illustrates a decoding method of decoding a camera parameter based on information about another camera parameter according to an embodiment;
FIG. 16 illustrates a configuration of an encoding apparatus for encoding information about whether a 3D video is encoded based on a rendering quality according to an embodiment;
FIG. 17 illustrates a configuration of a decoding apparatus for decoding a 3D video based on information about whether decoding a depth image based on information about whether the depth image is encoded based on a rendering quality according to an embodiment;
FIG. 18 illustrates a configuration of an encoding apparatus for encoding information about a distance between a plurality of cameras according to an embodiment;
FIG. 19 illustrates a configuration of a decoding apparatus for decoding a 3D video based on information about a distance between a plurality of cameras according to an embodiment;
FIG. 20 illustrates an encoding method of encoding information about whether a 3D video is encoded based on a rendering quality according to an embodiment;
FIG. 21 illustrates a decoding method of decoding a 3D video based on information about whether decoding a depth image based on information about whether the depth image is encoded based on a rendering quality according to an embodiment;
FIG. 22 illustrates an encoding method of encoding information about a distance between a plurality of cameras according to an embodiment; and
FIG. 23 illustrates a decoding method of decoding a 3D video based on information about a distance between a plurality of cameras according to an embodiment.

### DETAILED DESCRIPTION

Reference will now be made in detail to embodiments, examples of which are illustrated in the accompanying drawings, wherein like reference numerals refer to like elements throughout. Embodiments are described below to explain the present disclosure by referring to the figures.

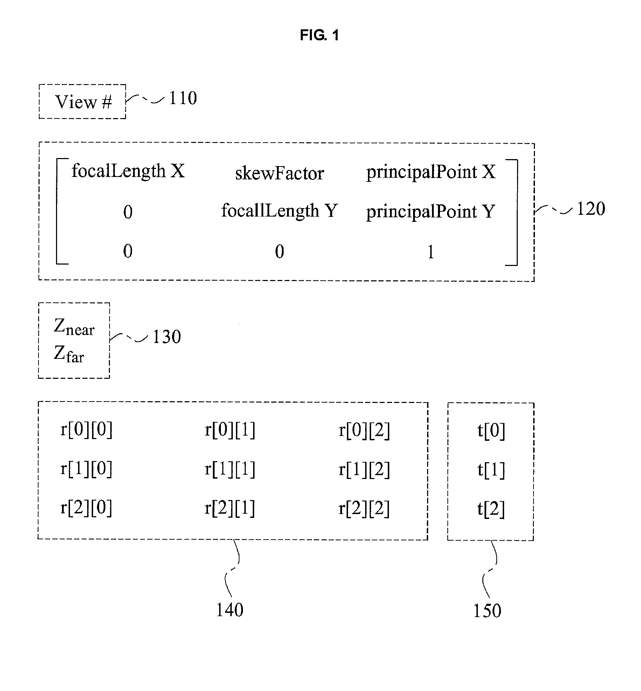

FIG. 1 illustrates an example of supplementary information of a three-dimensional (3D) video according to an embodiment.

Referring to FIG. 1, the supplementary information may be divided into camera information and depth range information 130.

The camera information is required to render the 3D video, and may include view information 110, an intrinsic parameter 120, a rotation parameter 140, and a translation parameter 150.

The view information 110 indicates information about a view at which camera photographing is performed to perform multi-view photographing for the 3D video.

The intrinsic parameter 120 indicates information about unique characteristics of a camera, for example, a focal length, a skew factor, and a principal point. Intrinsic parameter information may be stored in a matrix form.

The rotation parameter 140 indicates information about a directivity and a rotated level of a camera in a form of a 3x3 matrix.

The translation parameter 150 may include information about a camera position.

The depth range information 130 may include a depth value of a farthest distance and a depth value of a nearest distance from a depth area that is desired to be expressed in the 3D video.

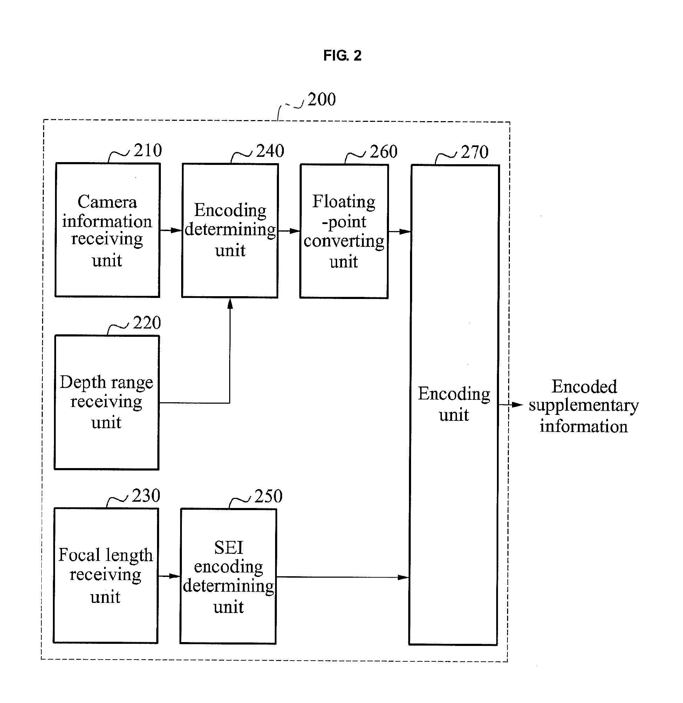

FIG. 2 illustrates a configuration of an encoding apparatus 200 for encoding supplementary information of a 3D video according to an embodiment.

Referring to FIG. 2, the encoding apparatus 200 may include a camera information receiving unit 210, a depth range receiving unit 220, a focal length receiving unit 230, an encoding determining unit 240, a supplemental enhancement information (SEI) encoding determining unit 250, a floating-point converting unit 260, and an encoding unit 270.

The camera information receiving unit 210 may receive camera information, for example, the view information 110, the intrinsic parameter 120, the rotation parameter 140, the translation parameter 150, and the like.

The depth range receiving unit 220 may receive depth range information that is expressed using a maximum depth value and a minimum depth value.

The encoding determining unit 240 may determine that an updated parameter among parameters included in the camera information and parameters included in the depth range information is a parameter to be encoded, and may generate update information including information about the updated parameter and information about a parameter not updated. That is, if at least one of the parameters from the camera information receiving unit 210 or the depth range receiving unit 230 is updated, the encoding determining unit 240 may generate update information. The encoding determining unit 240 may determine whether a parameter is updated according to a flag value, for example.

The encoding determining unit 240 may determine whether an update is performed with respect to each of the parameters included in the camera information and the parameters included in the depth range information, to thereby determine whether encoding is required with respect to each of the parameters. In this instance, the encoding determining unit 240 may generate the update information indicating whether an update is performed for each of the parameters included in the camera information and the parameters included in the depth range information.

In the case of indicating whether update is performed for each parameter, update information and an updated parameter may be configured in a form such as that shown below, for example, in Table 1:

**[Table 1]**

| syntax | | | Semantics |
|---|---|---|---|
| new_param_flag | | | determines whether camera parameter information is updated in current frame |
| if(new_param_flag){ | | | |
| new_intrinsic_param_flag | | | determines whether intrinsic parameter is updated among updated camera parameters |
| new_rotation_param_flag | | | determines whether rotation parameter is updated among updated camera parameters |
| new_translation_param_flag | | | determines whether translation parameter is updated among updated camera parameters |
| new_depth_value_flag | | | determines whether depth value is updated among updated camera parameters |
| if(new_intrinsic_param_flag ){ | | | |
| | | new_focal_length_x_flag | determines whether focal_length_x is updated among updated intrinsic parameters |
| | | if(new_focal_length_x_flag){ | |
| | | prec_focal_length_x | precision of focal_length_x |
| | | sign_focal_length_x | sign of focal_length_x |
| | | exponent_focal_length_x | exponent of focal_length_x |
| | | mantissa_focal_length_x | mantissa of focal_length_x |
| | | } | |
| | | new_focal_length_y_flag | determines whether focal_length_y is updated among updated intrinsic parameters |
| | | if(new_focal_length_y_flag){ | |
| | | prec_focal_length_y | precision of focal_length_y |
| | | sign_focal_length_y | sign of focal_length_y |
| | | exponent_focal_length_y | exponent of focal_length_y |
| | | mantissa_focal_length_y | mantissa of focal_length_y |
| | } | | |
| | new_principal_point_x_flag | | determines whether principal_point_x is updated among updated intrinsic parameters |
| | if(new_principal_point_x_flag){ | | |
| | | prec_principal_point_x | precision of principal_point_x |
| | | sign_principal_point_x | sign of principal_point_x |
| | | exponent_principal_point-x | exponent of principal_point_x |
| | | mantissa_principal_point_x | mantissa of principal_point_x |
| | } | | |
| | new_principal_point_y_flag | | determines whether principal_point_y is updated among updated intrinsic parameters |
| | | if(new_principal_point_y_flag){ | |
| | | prec_principal_point_y | precision of principal_point_y |
| | | sign_principal_point_y | sign of principal_point_y |
| | | exponent_principal_point_y | exponent of principal_point_y |
| | | mantissa_principal_point_y | mantissa of principal_point_y |
| | } | | |
| | new skew factor flag | | determines whether skew_factor is updated among updated intrinsic parameters |
| | if(new_skew_factor_flag){ | | |
| | | prec_skew_factor | precision of skew_factor |
| | | sign_skew_factor | sign of skew_factor |
| | | exponent_skew_factor | exponent of skew_factor |
| | | mantissa_skew_factor | mantissa of skew_factor |
| | } | | |
| } | | | |
| if(new_rotation_param_flag){ | | | |
| | for(i=0; i<3; i++){ | | |
| | | for(j=0; j<3; j++){ | |
| | | new_rotation_param_sub_flag | determines whether [i][j]^{th} component is updated among updated rotation parameters |
| if (new_rotation_param_sub_flag){ | | | |
| | | prec_rotation_param[i][j] | precision of [i][j]^{th} component among rotation parameters |
| | | sign_rotation_param[i][j] | sign of [i][j]^{th} component among rotation parameters |
| | | exponent_rotation_param[i][j] | exponent of [i][j]^{th} component among rotation parameters |
| | | mantissa_rotation_param[i][j] | mantissa of [i][j]^{th} component among rotation parameters |
| | | } | |
| | | } | |
| | } | | |
| } | | | |
| if(new_translation_param_flag ){ | | | |
| | for(i=0; i<3; i++){ | | |
| | | new_translation_param_sub_flag | determines whether [i]^{th} component is updated among updated translation parameters |
| if( new_translation_param_sub_flag){ | | | |
| | | prec_translation_param[i] | precision of [i]^{th} component among translation parameters |
| | | sign_translation_param[i] | sign of [i]^{th} component among translation parameters |
| | | exponent_translation_param[i] | exponent of [i]^{th} component among translation parameters |
| | | mantissa_translation_param[i] | mantissa of [i]^{th} component among translation parameters |
| | | } | |
| | } | | |
| } | | | |
| | if(new_depth_value_flag){ | | |
| | | new near depth value flag | determines whether near depth value is updated among updated depth values |
| | | if(new_near_depth_value_flag){ | |
| | | prec_near_depth_value | precision of near_depth_value |
| | | sign_near-depth-value | sign of near_depth_value |
| | | exponent_near_depth_value | exponent of near_depth_value |
| | | mantissa_near_depth_value | mantissa of near_depth_value |
| | | } | |
| | | new_far_depth_value_flag | determines whether far_depth_value is updated among depth values |
| | | if(new_far_depth_alue_flag){ | |
| | | prec_far_depth_value | precision of far_depth_value |
| | | sign_far_depth_value | sign of far_depth_value |
| | | exponent_far_depth_value | exponent of far_depth_value |
| | | mantissa_far_depth_value | mantissa of far_depth_value |
| | | } | |
| | } | | |
| } | | | |

The encoding determining unit 240 may group, into predetermined groups, the parameters included in the camera information and the parameters included in the depth range information. The encoding determining unit 240 may determine whether an update is performed with respect to at least one of parameters included in the groups, to thereby determine that there is a need to encode all of the parameters included in a group including at least one updated parameter. For example, in one embodiment, intrinsic parameters may be grouped together in a first group, rotation parameters may be grouped together in a second group, translation parameters may be grouped together in a third group, and depth value parameters may be grouped together in a fourth group. In this instance, the encoding determining unit 240 may generate the update information indicating whether an update is performed for each of the groups.

In the case of indicating whether an update is performed for each group (where certain parameters are grouped together), update information and an updated parameter may be configured in a form such as that shown below, for example, in Table 2:

**[Table 2]**

| syntax | | | Semantics |
|---|---|---|---|
| new_param_flag | | | determines whether camera parameter information in current frame |
| if(new_param_flag){ | | | |
| new_intrinsic_param_flag | | | determines whether intrinsic parameter is updated among updated camera parameters |
| new_rotation_param_flag | | | determines whether rotation parameter is updated among updated camera parameters |
| new_translation_param_flag | | | determines whether translation parameter is updated among updated camera parameters |
| new_depth_value_flag | | | determines whether depth value is updated among updated camera parameters |
| if(new_intrinsic_param_flag){ | | | |
| | | prec_focal_length_x | precision of focal_length_x |
| | | sign_focal_length_x | sign of focal_length_x |
| | | exponent_focal_length_x | exponent of focal_length_x |
| | | mantissa_focal_length_x | mantissa of focal_length_x |
| | | prec_focal_length_y | precision of focal_length_y |
| | | sign_focal_length_y | sign of focal_length_y |
| | | exponent_focal_length_y | exponent of focal_length_y |
| | | mantissa_focal_length_y | mantissa of focal_length_y |
| | | prec_principal_point_x | precision of principal_point_x |
| | | sign_principal_point_x | sign of principal_point_x |
| | | exponent_principal_point_x | exponent of principal_point_x |
| | | mantissa_principal_point_x | mantissa of principal_point_x |
| | | prec_principal_point_y | precision of principal_point_y |
| | | sign_principal_point_y | sign of principal_point_y |
| | | exponent_principal_point_y | exponent of principal_point_y |
| | | mantissa_principal_point_y | mantissa of principal_point_y |
| | | prec_skew_factor | precision of skew_factor |
| | | sign_skew_factor | sign of skew_factor |
| | | exponent_skew_factor | exponent of skew_factor |
| | | mantissa_skew_factor | mantissa of skew_factor |
| } | | | |
| if(new_rotation_param_flag){ | | | |
| | | for(i=0; i<3; i++){ | |
| | | for( j=0; j<3; j++){ | |
| | | prec_rotation_param[i][j] | precision of [i][j]^{th} component among rotation parameters |
| | | sign_rotation_param[i][j] | sign of [i][j]^{th} component among rotation parameters |
| | | exponent_rotation_param[i][j] | exponent of [i][j]^{th} component among rotation parameters |
| | | mantissa_rotation_param[i][j] | mantissa of [i][j]^{th} component among rotation parameters |
| | | } | |
| | } | | |
| } | | | |
| if(new_translation_param_flag){ | | | |
| | for(i=0; i<3; i++){ | | |
| | | prec_translation_param[i] | precision of [i]^{th} component among translation parameters |
| | | sign_translation_param[i] | sign of [i]^{th} component among translation parameters |
| | | exponent_translation_param[i] | exponent of [i]^{th} component among translation parameters |
| | | mantissa_translation_param[i] | mantissa of [i]^{th} component among translation parameters |
| | } | | |
| } | | | |
| if(new_depth_value_flag){ | | | |
| | | prec_near_depth_value | precision of near_depth_value |
| | | sign_near_depth_value | sign of near_depth_value |
| | | exponent_near_depth_value | exponent of near_depth_value |
| | | mantissa_near_depth_value | mantissa of near_depth_value |
| | | prec_far_depth_value | precision of far_depth_value |
| | | sign_far_depth_value | sign of far_depth_value |
| | | exponent_far_depth_value | exponent of far_depth_value |
| | | mantissa_far_depth_value | mantissa of far_depth_value |
| | } | | |
| } | | | |

In the case of indicating whether an update is performed for each group the precision of an updated parameter may be set to be identical for each group by using floating-point conversion. Thus, update information and an updated parameter may be configured to be in a form such as that shown below, for example, in Table 3:

**[Table 3]**

| syntax | | | Semantics |
|---|---|---|---|
| new_param_flag | | | determines whether camera parameter information is updated in current frame |
| if(new_param_flag){ | | | |
| | | new_intrinsic_param_flag | determines whether intrinsic parameter is updated among updated camera parameters |
| | | new_rotation_param_flag | determines whether rotation parameter is updated among updated camera parameters |
| | | new_translation_param_flag | determines whether translation parameter is updated among updated camera parameters |
| | | new_depth_value_flag | determines whether depth value is updated among updated |
| | | | camera parameters |
| if(new_intrinsic_param_flag){ | | | |
| | prec_focal_length | | precision of focal_length_x and focal_length_y |
| | sign_focal_length_x | | sign of focal_length_x |
| | exponent_focal_length_x | | exponent of focal_length_x |
| | mantissa_focal_length_x | | mantissa of focal_length_x |
| | sign_focal_length_y | | sign of focal_length_y |
| | exponent_focal_length_y | | exponent of focal_length_y |
| | mantissa_focal_length_y | | mantissa of focal_length_y |
| | prec_principal_point | | precision of principal_point_x and principal_point_y |
| | sign_principal_point_x | | sign of principal_point_x |
| | exponent_principal_point_x | | exponent of principal_point_x |
| | mantissa_principal_point_x | | mantissa of principal_point_x |
| | sign_principal_point_y | | sign of principal_point_y |
| | exponent_principal_point_y | | exponent of principal_point_y |
| | mantissa_principal_point_y | | mantissa of principal_point_y |
| | prec_skew_factor | | precision of skew_factor |
| | sign_skew_factor | | sign of skew_factor |
| | exponent_skew_factor | | exponent of skew_factor |
| | mantissa_skew_factor | | mantissa of skew_factor |
| } | | | |
| if(new_rotation_param_flag){ | | | |
| | prec_rotation_param | | precision of rotation parameter |
| | for(i=0; i<3; i++){ | | |
| | for(j=0; j<3; j++){ | | |
| | | sign_rotation_param[i][j] | sign of [i][j]^{th} component among rotation parameters |
| | | exponent_rotation_param[i][j] | exponent of [i][j]^{th} component among rotation parameters |
| | | mantissa_rotation_param[i][j] | mantissa of [i][j]^{th} component among rotation parameters |
| | | } | |
| | } | | |
| } | | | |
| if(new_translation_param_flag){ | | | |
| | prec_translation_param[i] | | precision of translation parameter |
| | for(i=0; i<3; i++){ | | |
| | | sign_translation_param[i] | sign of [i]^{th} component among translation parameters |
| | | exponent_translation_param[i] | exponent of [i]^{th} component among translation parameters |
| | | mantissa_translation_param[i] | mantissa of [i]^{th} component among translation parameters |
| | } | | |
| } | | | |
| if(new_depth_value_flag){ | | | |
| | | prec_depth_value | precision of depth_value |
| | | sign_near_depth_value | sign of near_depth_value |
| | | exponent_near_depth_value | exponent of near_depth_value |
| | | mantissa_near_depth_value | mantissa of near_depth_value |
| | | sign_far_depth_value | sign of far_depth_value |
| | | exponent_far_depth_value | exponent of far_depth_value |
| | | mantissa_far_depth_value | mantissa of far_depth_value |
| | } | | |
| } | | | |

In the case of transmitting a first frame among a plurality of frames or in the case of transmitting a frame at predetermined intervals in order to provide a random access service, the encoding determining unit 240 may determine that all of the parameters included in the camera information and the parameters included in the depth range information are parameters to be encoded.

Even in the case of transmitting the first frame or in the case of transmitting the frame at predetermined intervals in order to provide the random access service, default values of some parameters may be set. In this case, the encoding determining unit 240 may determine that the parameters having the predetermined default values do not need to be updated and may determine that parameters not having the predetermined default values need to be updated, in generating update information indicating whether an update is performed.

As an example of predetermined default values, principal point y may have a default value of height/2, principal point x may have a default value of width/2, a rotation parameter may have a form of an identity matrix as a default value, and a skew factor may have "zero" as a default value. In the case of a translation parameter, both y and z may have "zero" as a default value. The above default values are provided by way of example only, and are not limited to these default values. Further, alternative parameters may have default values in addition to or instead of the above-mentioned parameters having default values.

The encoding determining unit 240 may set whether to make a determination about whether to perform encoding based on whether to update supplementary information, using flag information such as that shown below, for example, in Table 4:

**[Table 4]**

| syntax | Semantics |
|---|---|
| | Top flag that determines update of camera parameter information in current view |
| variable_param_flag | Positioned in top of the aforementioned syntaxes. Only if variable_param_flag =1, lower syntaxes operate. If "0", components of each parameter are encoded only each once. |

In the case of not making a determination about whether to perform encoding based on whether to update supplementary information, the encoding determining unit 240 may not verify (i.e., judge or determine) whether to update the supplementary information. In the case of transmitting the first frame among a plurality of frames or in the case of transmitting the frame at predetermined intervals in order to provide the random access service, the encoding determining unit 240 may determine that all of the parameters included in the camera information and the parameters included in the depth range information are parameters to be encoded.

In many cases, a camera parameter may be a real number value having a sign. The floating-point converting unit 260 may perform floating-point conversion of a parameter to be encoded.

The floating-point converting unit 260 may convert the parameter to be encoded to a sign, a mantissa, an exponent, and a precision.

When update information is present, the encoding unit 270 may encode the floating-point converted updated parameter together with the update information.

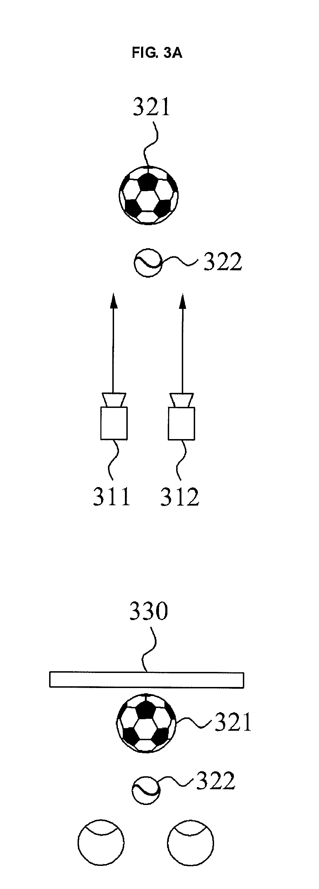

The focal length receiving unit 230 may receive focal length information, for example, zero_parallax. Focal length information associated with a 3D screen will be described with reference to FIGS. 3A through 3C. As shown in FIGS. 3A through 3C, when an object is expressed on the 3D screen, a position of an image focused on the 3D screen may vary based on a position of a focus. Here, focal length information may be information about a depth value of an object formed on a 3D display apparatus.

FIG. 3A shows a case in which two cameras 311 and 312 are positioned in parallel with each other. In this case, when two objects 321 and 322 are photographed using the two cameras 311 and 312, the objects 321 and 322 in an acquired image may be expressed to be positioned in front of a 3D screen 330, relative to an observer viewing the acquired image, for example. In this case, a focal length of a 3D video may be determined to be shorter than a distance from the 3D screen 330.

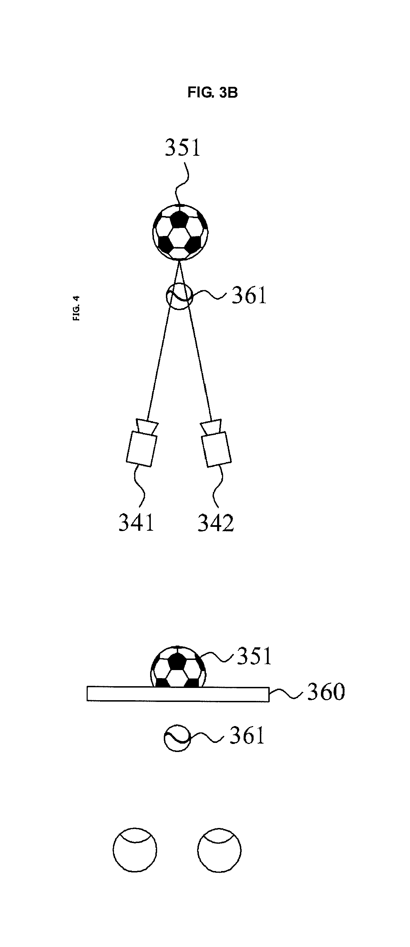

FIG. 3B shows a case in which two cameras 341 and 342 are focused on a first object 351. In this case, when two objects, the first object 351 and a second object 361 are photographed using the two cameras 341 and 342, the first object 351 in an acquired image may be expressed on a 3D screen 360 and the second object 361 in the acquired image may be expressed to be in front of the 3D screen 360, relative to an observer viewing the acquired image, for example. In this case, a focal length of a 3D video may be determined to be equal to a distance from the 3D screen 360.

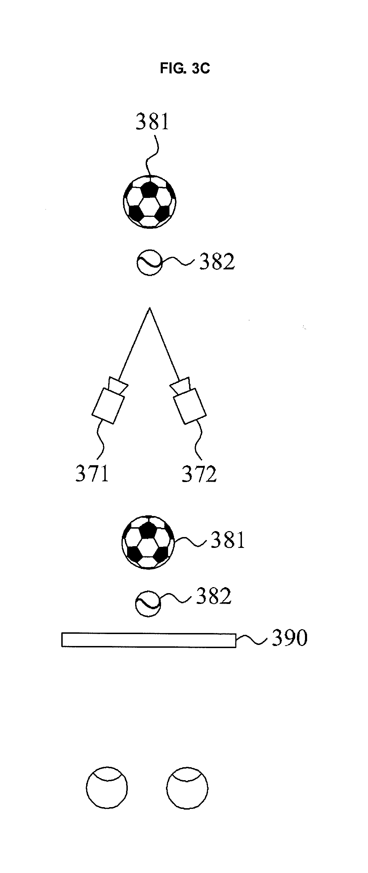

FIG. 3C shows a case in which two cameras 371 and 372 are focused at a point shorter than a distance from a first object 381 and a second object 382. In this case, when two objects, the first object 381 and the second object 382 are photographed using the two cameras 371 and 372, the first object 381 and the second object 382 in an acquired image may be expressed to be behind a 3D screen 390, relative to an observer viewing the an acquired image, for example. In this case, a focal length of a 3D video may be determined to be longer than a distance from the 3D screen 390.

According to an aspect, focal length information may be set in a form such as that shown below, for example, in Table 5.

**[Table 5]**

| 3dv_zero_parallax_info(payload){ | C | Descriptor |
|---|---|---|
| ... | | |
| Zero_parallax | 5 | ue(v) |
| ... | | |
| } | | |

The SEI encoding determining unit 250 may verify whether focal length information is updated and, when the focal length information is updated, may determine that encoding is required.

In the case of transmitting a first frame or in the case of transmitting a frame at predetermined intervals to provide a random access frame, the SEI encoding determining unit 250 may determine that encoding of the focal length information is required.

When encoding of the focal length information is required according to the determination result of the SEI encoding determining unit 250, the encoding unit 270 may encode the focal length information.

Each of the above-mentioned tables (Tables 1-5) or variations thereof, may be stored in a storage unit (not shown) of the encoding apparatus 200. Default values corresponding to parameters may also be stored in a database of the storage unit, for example. Default values may be set by a user or may be predetermined values. The storage unit may be embodied as a non-transitory computer readable medium, including hard disks, floppy disks, flash memory or memory cards (e.g., a USB drive), or optical media such as CD ROM discs and DVDs.

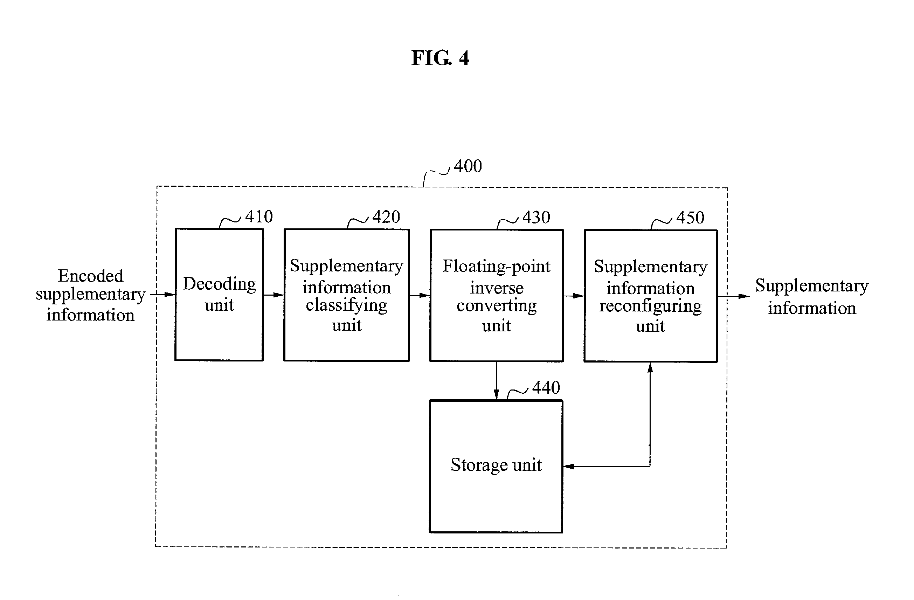

FIG. 4 illustrates a configuration of a decoding apparatus 400 for decoding supplementary information of a 3D video according to an embodiment.

Referring to FIG. 4, the decoding apparatus 400 may include a decoding unit 410, a supplementary information classifying unit 420, a floating-point inverse converting unit 430, a storage unit 440, and a supplementary information reconfiguring unit 450.

The decoding unit 410 may receive and decode encoded supplementary information. In this instance, the received encoded supplementary information may include at least one of view information, an intrinsic parameter, a rotation parameter, a translation parameter, and focal length information. The encoded supplementary information may further include update information indicating whether the supplementary information is updated.

When update information is included in the encoded supplementary information, the supplementary information classifying unit 420 may classify the decoded supplementary information as an updated parameter included in camera information or an updated parameter included in depth range information.

On the contrary, when the update information is not included in the encoded supplementary information, all of the parameters may be included in the supplementary information decoded by the decoding unit 410. Accordingly, the supplementary information classifying unit 420 may classify the decoded supplementary information into parameters included in the camera information and parameters included in the depth range information.

The floating-point inverse converting unit 430 may perform floating-point inverse conversion of parameters classified by the supplementary information classifying unit 420 or updated parameters.

The storage unit 440 may store latest supplementary information. For example, parameters included in the camera information may be grouped and/or classified according to a first group, and parameters included in the depth range information may be grouped and/or classified according to a second group. The grouped supplementary information (e.g., the first group and the second group) may be stored in the storage unit 440 according to the respective groups. The supplementary information may be further classified and grouped, for example, according to whether the parameters included in the camera information are intrinsic parameters, rotation parameters, or translation parameters. The storage unit 440 may be embodied as a non-transitory computer readable medium, including hard disks, floppy disks, flash memory or memory cards (e.g., a USB drive), or optical media such as CD ROM discs and DVDs.

The supplementary information reconfiguring unit 450 may store a floating-point inversely converted parameter in the storage unit 440, and may verify a parameter not updated using the latest supplementary information stored in the storage unit 440. That is, when a particular parameter is not determined to have been updated, the supplementary information reconfiguring unit 450 may retrieve that parameter (which was previously stored) from the storage unit 440.

When the parameter not updated is absent in the latest supplementary information, the supplementary information reconfiguring unit 450 may verify, as a corresponding parameter value, a default value that is set for each parameter. That is, when a particular parameter is determined to not have been updated, and that parameter's value was not previously stored in the storage unit 440, the supplementary information reconfiguring unit 450 may retrieve a default value for that parameter. The default value may also be stored in the storage unit 440.

Hereinafter, a method of encoding and decoding a 3D video in an encoding apparatus and a decoding apparatus constructed as above according to an embodiment will be described.

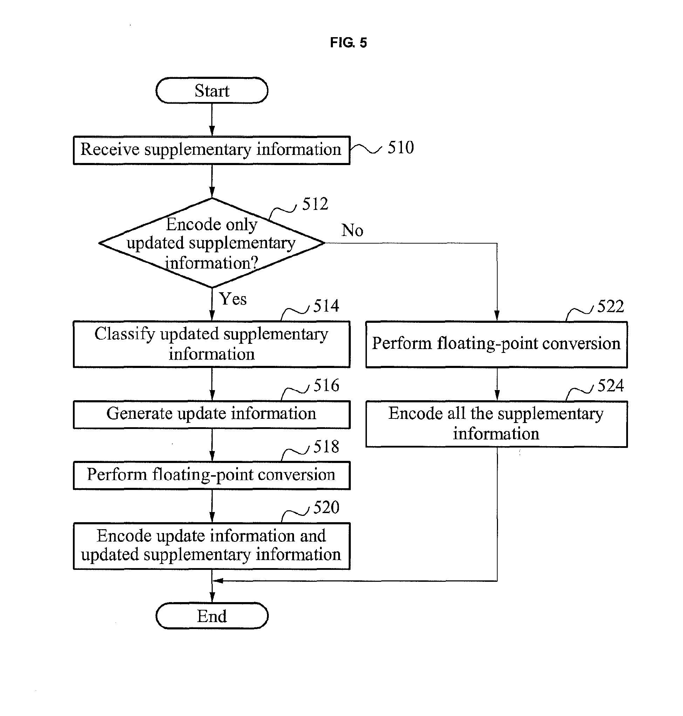

FIG. 5 illustrates a process of encoding supplementary information of a 3D video in the encoding apparatus 200 of FIG. 2 according to an embodiment.

Referring to FIG. 5, in operation 510, the encoding apparatus 200 may receive supplementary information.

In operation 512, the encoding apparatus 200 may verify whether to encode only updated supplementary information or the entire supplementary information. Here, a case in which the entire supplementary information is verified to be encoded may correspond to a case in which a first frame is transmitted or a case in which a frame is transmitted at predetermined intervals to provide a random access service.

When only the updated supplementary information is verified to be encoded in operation 512, the encoding apparatus 200 may verify an updated parameter from the received supplementary information and thereby classify the supplementary information as an updated parameter and a parameter not updated in operation 514.

In operation 516, the encoding apparatus 200 may generate update information including information about the updated parameter and information about the parameter not updated. Here, the update information may be information indicating whether an update is performed for each parameter, and may also be information indicating whether an update is performed for each group of parameters.

In operation 518, the encoding apparatus 200 may perform floating-point conversion of the updated parameter.

In operation 520, the encoding apparatus 200 may encode the update information and the floating-point converted parameter.

On the contrary, when the entire supplementary information is verified to be encoded in operation 512, the encoding apparatus 200 may perform floating-point conversion with respect to all of the parameters that are included in the supplementary information in operation 522.

In operation 524, the encoding apparatus 200 may encode the floating-point converted parameter.

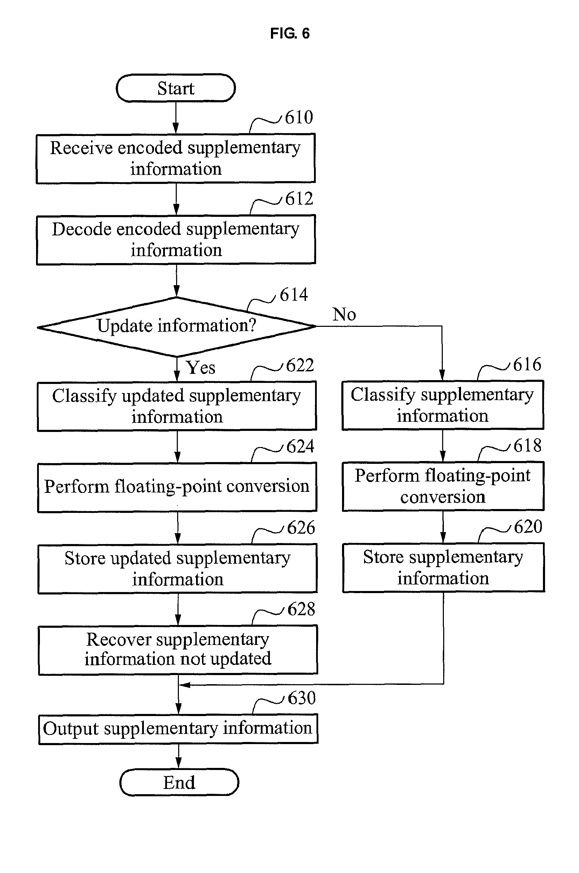

FIG. 6 illustrates a process of decoding supplementary information of a 3D video in the decoding apparatus 400 of FIG. 4 according to an embodiment.

Referring to FIG. 6, in operation 610, the decoding apparatus 400 may receive encoded supplementary information from the encoding apparatus 200.

In operation 612, the decoding apparatus 400 may decode the encoded supplementary information.

In operation 614, the decoding apparatus 400 may verify whether update information is included in the encoded supplementary information.

When the update information is not included in the encoded supplementary information based upon the verification result of operation 614, the decoding apparatus 400 may classify the decoded supplementary information into parameters included in camera information and parameters included in depth range information in operation 616.

In operation 618, the decoding apparatus 4000 may perform floating-point inverse conversion of the classified parameters.

In operation 620, the decoding apparatus 400 may store the floating-point inversely converted parameters in a storage unit as latest supplementary information. In operation 630, the decoding apparatus 400 may output the latest supplementary information.

On the contrary, when the update information is included in the decoded supplementary information based upon the verification result of operation 614, the decoding apparatus 400 may classify the decoded supplementary information as an updated parameter included in the camera information or an updated parameter included in the depth range information in operation 622.

In operation 624, the decoding apparatus 400 may perform floating-point inverse conversion of an updated parameter.

In operation 626, the decoding apparatus 400 may store the floating-point inversely converted parameter in a storage unit as latest supplementary information.

In operation 628, the decoding apparatus 400 may recover a parameter not updated using the latest supplementary information and/or a default value stored in the storage unit.

In operation 630, the decoding apparatus 400 may output the latest supplementary information.

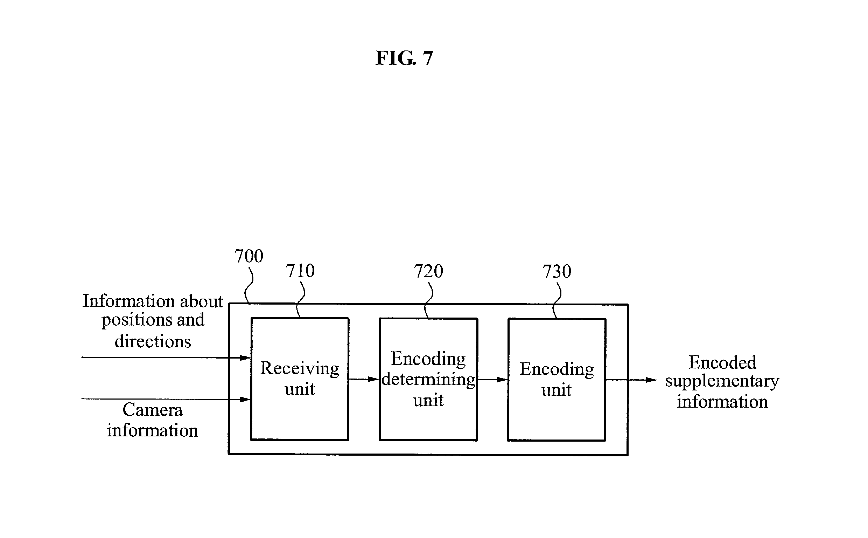

FIG. 7 illustrates a configuration of an encoding apparatus 700 for encoding supplementary information based on information about positions and directions of cameras according to an embodiment.

Referring to FIG. 7, the encoding apparatus 700 may include a receiving unit 710, an encoding determining unit 720, and an encoding unit 730.

Supplementary information encoded by the encoding apparatus 700 may be supplementary information about an image that is acquired using the plurality of cameras. The plurality of cameras may be arranged in various forms to acquire an image through photographing.

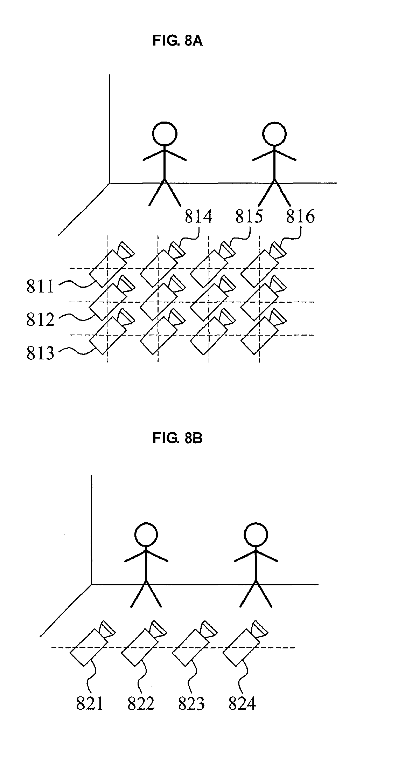

FIGS. 8A through 8C illustrate examples of positions and directions of cameras according to an embodiment.

FIG. 8A shows an example in which cameras 811, 812, 813, 814, 815, and 816 are arranged on a two-dimensional (2D) plane. In this example, all of the cameras 811, 812, 813, 814, 815, and 816 may face the same direction and thereby acquire an image through photographing. The example of FIG. 8A may be referred to as a 2D parallel arrangement or configuration. The position of the cameras may be described in terms of coordinates. For example, the position of a camera may be described according to (x, y, z) coordinates, in which coordinates of the x axis may indicate a distance between respective cameras, or a distance between an origin of the x axis on which the cameras are arranged and each of the cameras. The coordinates of the y axis may indicate a height of each camera, for example a vertical distance between respective cameras, or a vertical distance between an origin of the y axis on which the cameras are arranged and each of the cameras. The coordinates of the z axis may indicate information about a distance between each camera and an object of a 3D video.

FIG. 8B shows an example in which cameras 821, 822, 823, and 824 are arranged on a one-dimensional (1 D) line. In this example, all of the cameras 821, 822, 823, and 824 may face the same direction and thereby acquire an image through photographing. The example of FIG. 8B may be referred to as a 1D parallel arrangement or configuration. For example, the cameras may be arranged along an axis, such as the x axis, and may have a same y axis value. However, the cameras may be arranged on a different axis, such as the y axis and have a same x axis value. Other arrangements are also possible.

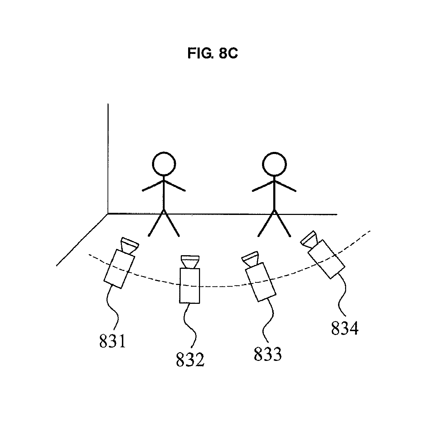

FIG. 8C shows an example in which cameras 831, 832, 833, and 834 are arranged on an arced line. In this example, each of the cameras 831, 832, 833, and 834 may face a different direction to thereby acquire an image through photographing. The example of FIG. 8C may be referred to as a 1D arc arrangement or configuration.

The receiving unit 710 may receive information about positions and directions of a plurality of cameras. That is, the receiving unit 710 may receive information on which direction each camera is facing and position information of each camera. When the plurality of cameras are arranged as 1D parallel as shown in FIG. 8B, all of the plurality of cameras may face the same direction. The encoding determining unit 720 may select a parameter to be encoded based on information about the positions and the directions of the plurality of cameras.

For example, in a case in which the plurality of cameras are arranged on a linear line and faces the same direction, that is, in the case of 1D parallel as shown in FIG. 8B, all of the plurality of cameras may have the same y component and thus, there may be no need to repeatedly encode the y component.

In this case, the encoding determining unit 720 may exclude, from parameters to be encoded, a camera parameter (y component) of a y axis among the parameters included in the camera information. The encoding determining unit 720 may select, as parameters to be encoded, only a camera parameter (x component) of an x axis and a camera parameter (z component or a z value) of a z axis. Here, the camera parameter of the x axis may indicate a distance between cameras based on an axis on which the cameras are arranged, or a distance between an origin of the axis on which the cameras are arranged and each of the cameras. The y component may indicate a height of each camera, for example a vertical distance between cameras, or a vertical distance between an origin of the y axis on which the cameras are arranged and each of the cameras. The z component or the z value may indicate information about a distance between each camera and an object of a 3D video.

For example, an encoding apparatus for encoding supplementary information of a 3D video image may simplify an encoding process by encoding only z_near, z_far, focal_length_x, principal_point_x, and translation_x among parameters included in the camera information. Accordingly, an amount of encoded information may be decreased.

Even though a configuration of excluding the y component from parameters to be encoded when cameras are arranged based on 1D parallel is described above, the x parameter or the z parameter may be excluded from parameters to be encoded when cameras are arranged based on another configuration. Accordingly, embodiments are not limited to examples in which cameras are arranged based on 1D parallel or in which the y component is excluded from parameters to be encoded.

The encoding unit 730 may encode information indicating that a portion of camera information is not encoded. According to an aspect, information indicating that a portion of camera information is not encoded may be acquisition_mode_info. A decoding apparatus for decoding supplementary information of a 3D video that receives camera information may determine that a portion of components are not encoded based on a value of acquisition_mode_info to thereby readily decode the camera information.

According to an aspect, acquisition_mode_info may be positioned in the same level or an upper layer of another flag indicating whether supplementary information is updated.

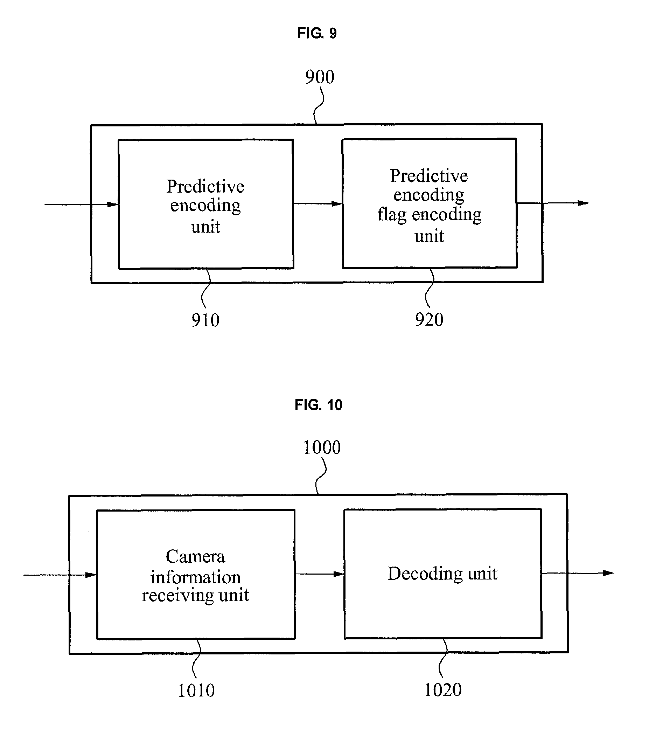

FIG. 9 illustrates a configuration of an encoding apparatus 900 for adding information about another camera parameter used to encode a camera parameter according to an embodiment.

Referring to FIG. 9, the encoding apparatus 900 may include a predictive encoding unit 910 and a predictive encoding flag encoding unit 920.

The predictive encoding unit 910 may perform predictive encoding of a first camera parameter. The first camera parameter may be a camera parameter in a predetermined time associated with a first view. The predictive encoding is an encoding scheme of comparing the first camera parameter with another camera parameter based on the other camera parameter in order to encode the first camera parameter and encoding only a difference value between the first camera parameter and the other camera parameter.

Here, the other camera parameter used for comparison with the first camera parameter in order to encode the first camera parameter may be a camera parameter associated with the first view, which is the same as the first camera parameter, and may be a camera parameter in a time prior to the time of the first camera parameter. That is, the other camera parameter may be a camera parameter in a different time of the same view. For example, the time prior to the first time of the first view of the first camera parameter may refer to a time in which the other camera parameter was encoded prior to the first camera parameter. The other camera parameter may be a camera parameter which was encoded immediately before the first camera parameter, and may be stored in a storage unit (not shown) of the encoding apparatus 900.

According to another embodiment, another camera parameter used for comparison with the first camera parameter in order to encode the first camera parameter may be a camera parameter associated with a second view that is different from the first view, and may be a camera parameter in the same time as the time of the first camera parameter. The camera parameter associated with a second view may be stored in a storage unit (not shown) of the encoding apparatus 900.

The predictive encoding flag encoding unit 920 may encode information about a view and a time of a camera parameter that is used to perform predictive encoding of the first camera parameter. According to an aspect, information about the view and the time of the camera parameter may be information about whether the predictive encoding unit 910 performs predictive encoding of the first camera parameter based on a second camera parameter in a time prior to a predetermined time of the first view, or information about whether the predictive encoding unit 910 performs predictive encoding of the first camera parameter based on a third camera parameter in a predetermined time of the second view.

FIG. 10 illustrates a configuration of a decoding apparatus 1000 for decoding supplementary information based on information about positions and directions of cameras according to an embodiment.

Referring to FIG. 10, the decoding apparatus 1000 may include a camera information receiving unit 1010 and a decoding unit 1020.

As shown in FIGS. 8A through 8C, the cameras may be arranged in various forms. Only a portion of parameters included in the camera information may be encoded. The camera information receiving unit 1010 may receive information about whether a portion of the parameters included in the camera information are encoded.

For example, when the cameras are arranged based on 1D parallel as shown in FIG. 8B, the cameras may have the same y component. Accordingly, there is no need to repeatedly encode the y component. In this case, the y component may be absent in the encoded camera information. The camera information receiving unit 910 may receive acquisition_mode_info as information indicating whether only a portion of parameters are encoded.

Based on a value of acquisition_mode_info, which indicates whether only a portion of parameters are encoded, the decoding unit 1020 may determine whether all of an x component, the y component, and a z component are encoded with respect to each of the cameras, or whether a portion of parameters are excluded and only another portion of parameters are encoded.

For example, based on a value of acquisition_mode_info, which indicates whether only a portion of parameters are encoded, the decoding unit 1020 may determine that the x component such as focal_length_x, principal_point_x, translation_x, and the like, and the z component such as z_near and z_far are encoded and parameters associated with the y component are not encoded. Based on the determination result, the decoding unit 1020 may decode a camera parameter included in the encoded camera information.

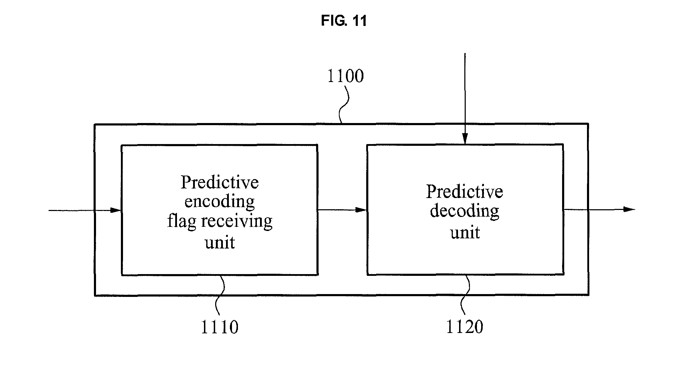

FIG. 11 illustrates a configuration of a decoding apparatus 1100 for decoding a camera parameter based on information about another camera parameter according to an embodiment.

Referring to FIG. 11, the decoding apparatus 1100 may include a predictive encoding flag receiving unit 1110 and a predictive decoding unit 1120.

The predictive encoding flag receiving unit 1110 may receive a predictive encoding flag used to decode a first camera parameter. Here, the predictive encoding flag indicates information about a camera parameter used to encode the first camera parameter, and information about a view and a time of the used camera parameter.

When the first camera parameter is a camera parameter in a first time of a first view, predictive encoding of the first camera parameter may be performed based on a second camera parameter in a time prior to the first time of the first view of the first camera parameter. Alternatively, predictive encoding of the first camera parameter may be performed based on a third camera parameter in a first time of a second view. For example, the time prior to the first time of the first view of the first camera parameter may refer to a time in which the second camera parameter was encoded prior to the first camera parameter. The second camera parameter may be a camera parameter which was encoded immediately before the first camera parameter, and may be stored in a storage unit (not shown) of the decoding apparatus 1100. The third camera parameter in a first time of a second view may also be stored in the storage unit.

The predictive decoding unit 1120 may determine a camera parameter that is used to perform predictive encoding of the first camera parameter, based on information about a view and a time of the used camera parameter. The predictive decoding unit 1120 may decode the first camera parameter by referring again to the camera parameter used to encode the first camera parameter. The predictive decoding unit 1120 may refer to the camera parameter used to encode the first camera parameter and obtain the camera parameter used to encode the first camera parameter by retrieving it from a storage unit (not shown) of the decoding apparatus 1100.

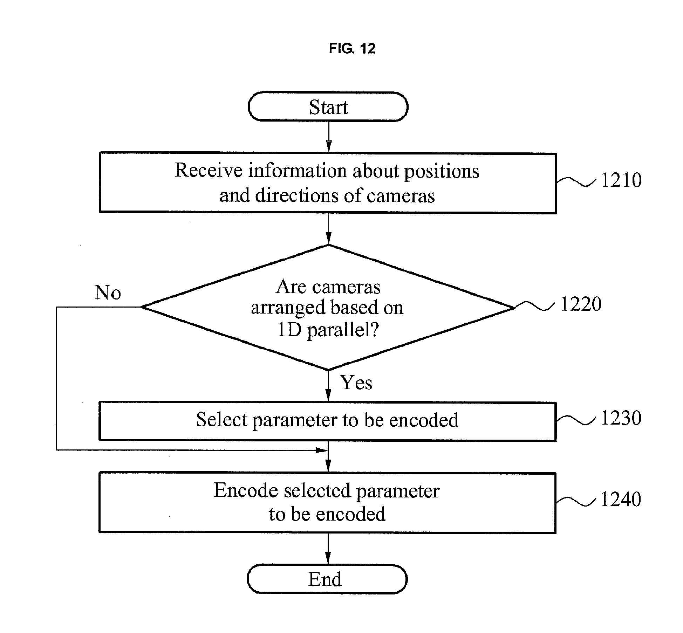

FIG. 12 illustrates an encoding method of encoding supplementary information based on information about positions and directions of cameras according to an embodiment.

In operation 1210, an encoding apparatus for encoding supplementary information of a 3D video may receive information about positions and directions of a plurality of cameras. According to an aspect, the plurality of cameras may be arranged in various forms, for example, as shown in FIGS. 8A through 8C.

In operation 1220, the encoding apparatus may verify whether the plurality of cameras is arranged based on 1D parallel, based on information about the positions and directions of the plurality of cameras. Here, 1 D parallel indicates that the plurality of cameras is arranged on a linear line and faces the same direction as shown, for example, in FIG. 8B.

In operation 1230, the encoding apparatus may select a parameter to be encoded from among parameters included in camera information, based on information about the positions and the directions of the plurality of cameras. When the plurality of cameras is arranged based on 1D parallel, only information about an x component indicating information about a distance between cameras and a z value indicating information about a distance between each camera and an object in camera information may be meaningful. Accordingly, the encoding apparatus may select the x component and the z value as parameters to be encoded, while omitting parameters associated with the y component. A case in which a y component is excluded from parameters to be encoded in the camera information may also occur in addition to the aforementioned case in which the plurality of cameras are arranged based on 1D parallel. A case in which other components (e.g., a x and/or z component) are excluded from parameters to be encoded in the camera information may also occur in alternative arrangements of the cameras.

That is, though a configuration of excluding the y component from parameters to be encoded when the plurality of cameras are arranged based on 1 D parallel is described in the embodiment of FIG. 12, another parameter such as the x component or a z component for example may be excluded when the plurality of cameras are arranged using a different method. That is, a portion of parameters may not be encoded based on a particular camera arrangement scheme.

In operation 1240, the encoding apparatus may encode camera information that is selected as the parameter to be encoded. Instead of encoding the entire camera information, unnecessary repeated information is excluded and only meaningful information is encoded and thus, the encoding apparatus may simplify and efficiently perform encoding.

According to an aspect, in operation 1240, the encoding apparatus may encode acquisition_mode_info indicating that a portion of parameters in camera information are not encoded.

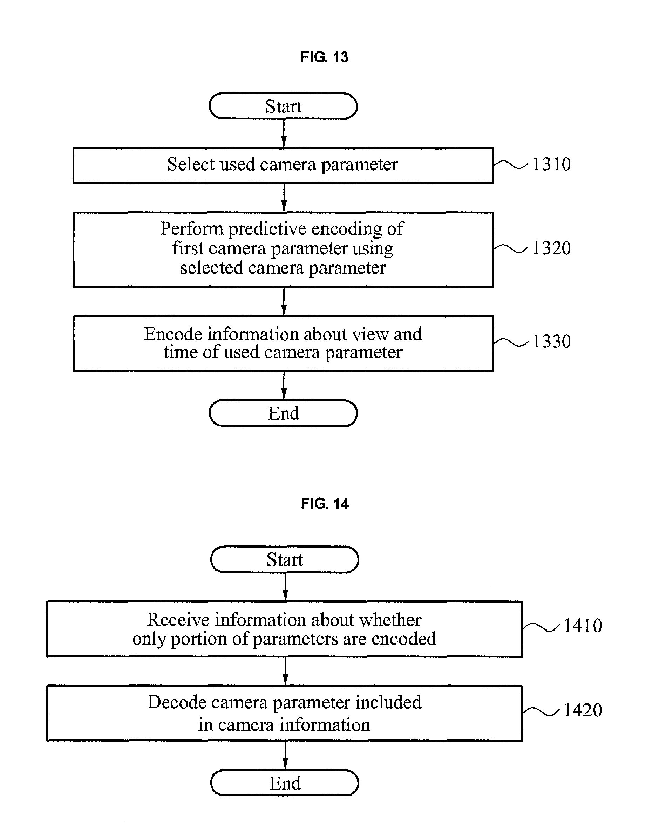

FIG. 13 illustrates an encoding method of adding information about another camera parameter used to encode a camera parameter according to an embodiment.

In operation 1310, an encoding apparatus for encoding supplementary information of a 3D video may select another camera parameter in order to encode a first camera parameter. The first camera parameter may be a camera parameter in a predetermined time of a first view. According to an aspect, to encode the first camera parameter, the encoding apparatus may select a second camera parameter in a time prior to the time of the first camera parameter. According to another aspect, to encode the first camera parameter, the encoding apparatus may select a third camera parameter in a predetermined time of the second view that is the same time as the time of the first camera parameter.

In operation 1320, the encoding apparatus may perform predictive encoding of the first camera parameter using the selected camera parameter. Here, the predictive encoding is an encoding scheme of comparing the first camera parameter with another camera parameter based on the selected camera parameter and encoding only a difference value between the first camera parameter and the other camera parameter. Accordingly, information about a camera parameter used to encode the first camera parameter may be required to decode the first camera encoded using the predictive encoding scheme.

In operation 1330, the encoding apparatus may encode information about the camera parameter used to encode the first camera parameter. According to an aspect, the encoding apparatus may encode information about a view and a time of the camera parameter used to perform predictive encoding of the first camera parameter.

Here, information about the view and the time of the camera parameter may include information about whether predictive encoding of the first camera parameter is performed based on a second camera parameter in a time prior to a predetermined time of the first view, or information about whether predictive encoding of the first camera parameter is performed based on a third camera parameter in a predetermined time of a second view that is the same time as the time of the first camera parameter.

FIG. 14 illustrates a decoding method of decoding supplementary information based on information about positions and directions of cameras according to an embodiment.

In operation 1410, a decoding apparatus for decoding supplementary information of a 3D video may receive information about whether only a portion of parameters in camera information are encoded. According to an aspect, the cameras may be arranged in various forms as shown, for example, in FIGS. 8A through 8C. In this case, an x component may indicate a distance between the respective cameras, based on an axis on which the cameras are arranged, or a distance between an origin of the axis on which the cameras are arranged and each of the cameras. The y component may indicate a height of each of the cameras, for example a vertical distance between respective cameras, or a vertical distance between an origin of the y axis on which the cameras are arranged and each of the cameras. Also, a z component may indicate information about a distance between each camera and an object of a 3D video. When the cameras are arranged based on a 1D parallel configuration as shown in FIG. 8B, the y component in the camera information may not be encoded. According to an aspect, the decoding apparatus may receive acquisition_mode_info as information about whether only a portion of parameters in the camera information is encoded.

In operation 1420, the decoding apparatus may decode the camera information based on a value of acquisition_mode_info which indicates whether only a portion of parameters in the camera information is encoded. For example, the decoding apparatus may determine that only the x component such as focal_length_x, principal_point_x, translation_x, and the like, and the z component such as z_near and z_far are encoded and the y component is not encoded. Based on the determination result, the decoding apparatus may decode a camera parameter included in the encoded camera information.

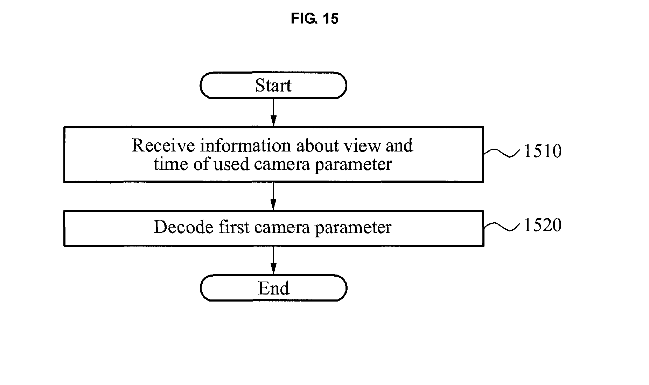

FIG. 15 illustrates a decoding method decoding a camera parameter based on information about another camera parameter according to an embodiment.

In operation 1510, a decoding apparatus for decoding supplementary information of a 3D video may receive a predictive encoding flag used to decode a first camera parameter. Here, the predictive encoding flag indicates information about a camera parameter used to encode a first camera parameter, and information about a view and a time of the used camera parameter.

When the first camera parameter is a camera parameter in a first time of a first view, predictive encoding of the first camera parameter may be performed based on a second camera parameter in a time prior to the first time of the first view. Alternatively, predictive encoding of the first camera parameter may be performed based on a third camera parameter of a first time of a second view, which is the same time as the first camera parameter.

In operation 1520, the decoding apparatus may determine a camera parameter that is used to perform predictive encoding of the first camera parameter, based on information about a view and a time of the used camera parameter. The decoding apparatus may decode the first camera parameter by referring again to the camera parameter used to encode the first camera parameter. The camera parameter used to encode the first camera parameter may be previously stored in a storage unit (not shown) of the decoding apparatus. The decoding apparatus may refer to the camera parameter used to encode the first camera parameter, by retrieving the camera parameter used to encode the first camera parameter from the storage unit.

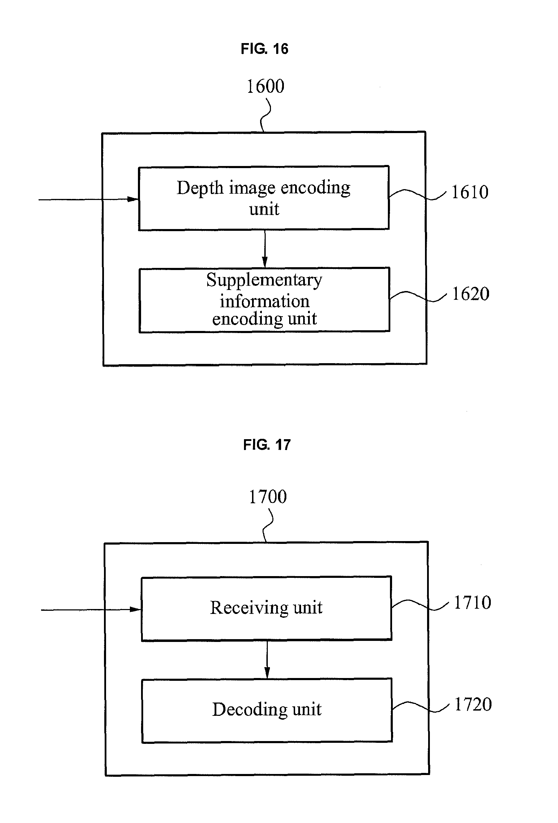

FIG. 16 illustrates a configuration of an encoding apparatus for encoding information about whether a 3D video is encoded based on a rendering quality according to an embodiment.

Referring to FIG. 16, the encoding apparatus 1600 may include a depth image encoding unit 1610 and a supplementary information encoding unit 1620.

The depth image encoding unit 1610 may encode a depth image of the 3D video. According to an aspect, the depth image encoding unit 1610 may encode the depth image using a bitrate-distortion optimization (RDO) scheme considering a synthetic image quality. The RDO scheme considering the synthetic image quality is a scheme of encoding the depth image based on a bitrate of the depth image and a quality of a synthetic image in an aspect that the depth image is generally utilized for virtual image composition. Accordingly, the quality of the synthetic image may be excellent and an encoded depth value may be accurate.

On the other hand, a general synthetic RDO scheme is a scheme of utilizing only a bitrate of a depth image. That is, the general synthetic RDO scheme performs encoding without considering the quality of the depth image and thus, the quality of the depth image may be seriously degraded and the encoded depth value may be inaccurate. Accordingly, the synthetic RDO scheme may significantly affect various application fields of the 3D video or encoding technology that requires an accurate depth value.

According to an aspect, the depth value encoding unit 1610 may encode the depth value using the RDO scheme considering the synthetic image quality. In a case in which the synthetic RDO scheme is applied, when the depth image is encoded using only the depth quality of the depth image, the quality of the encoded depth image may be degraded and the encoded depth value may be inaccurate. Therefore, in the case of applying the RDO scheme considering the synthetic image quality, the depth image encoding unit 1610 may encode the depth image by additionally utilizing a rendering quality of the depth image.

In this case, the supplementary information encoding unit 1620 may encode information about whether the depth image is encoded based on a rendering quality. When the depth image is encoded based on the rendering quality, the supplementary information encoding unit 1620 may additionally encode information about the rendering quality. The encoded depth image may be decoded based on the encoded information about the rendering quality and be synthesized to be a virtual image.

According to an aspect, information about whether the depth image is encoded based on the rendering quality may be utilized as a criterion to determine a reliability of a depth value in the 3D video.

According to an aspect, information about whether the depth image is encoded based on the rendering quality may be provided from a sequence level to a slice level, and may also be transmitted with respect to only a base view or may be transmitted with respect to all of the views.

According to an aspect, when the depth image is encoded based on the rendering quality, the supplementary information encoding unit 1620 may encode a ratio of the rendering quality of the depth image to a depth quality of the depth image and may transmit the encoded ratio to the decoding apparatus. Here, the rendering quality may also be referred to as a synthesis quality.

According to an aspect, when a value of the depth quality is assumed as "1", the supplementary information encoding unit 1620 may encode a value of a rendering quality and thereby transmit the encoded value to the decoding apparatus.

In this case, the supplementary information encoding unit 1620 may encode information about whether the depth image is encoded based on the rendering quality and the depth quality as shown below, for example, in Table 6:

**[Table 6]**

| seq_parameter_set_3dv_extension() { | | | C | Descriptor |
|---|---|---|---|---|
| | | ... | | |
| | | seq_yiew_synthesis_RDO-flag | 0 | u(1) |
| | if_(seq_view_synthesis_RDO-flag) | | | |
| | | ratio_of_synthesis_quality | 5 | ue(v) |
| | | ... | | |
| } | | | | |

Here, seq_view_synthesis_RDO_flag indicates whether the depth image is encoded based on the rendering quality or the synthesis quality. For example, when the depth image is encoded based on the rendering quality or synthesis quality, the seq_view_synthesis_RDO_flag may have a value of "1". On the contrary, when the depth image is encoded not using the rendering quality or the synthesis quality, the seq_view_synthesis_RDO_flag may have a value of zero.

Also, ratio_of_synthesis_quality denotes a ratio of the rendering quality or the synthesis quality to the depth quality.

In another case, the supplementary information encoding unit 1620 may encode information about: (1) whether the RDO scheme considering the synthetic image quality is applied, (2) the rendering quality, and (3) the depth quality, as shown below, for example, in Table 7:

**[Table 7]**

| | | | | |
|---|---|---|---|---|
| seq_parameter_set_3dv_extension() { | | | C | Descripto r |
| | | ... | | |
| | | **seq_yiew_synthesis_RDO-flag** | 0 | u(1) |
| | if(**seq_view_synthesis_RDO-flag)** | | | |
| | | **ratio_of_synthesis_quality** | 5 | ue(v) |
| | | **ratio_of_depth_quality** | 5 | ue(v) |
| | | ... | | |
| } | | | | |

Here, ratio_of_depth_quality indicates a ratio of the depth quality to the rendering quality or the synthesis quality.

Referring to Table 6 and Table 7, the supplementary information encoding unit 1620 may encode supplementary information about the depth image using the following methods:
1) Encoding only seq_view_synthesis_RDO_flag:
   When the depth image is encoded not using the rendering quality, the supplementary information encoding unit 1620 may encode a value of seq_view_synthesis_RDO_flag to "zero" and may not encode the ratio of the rendering quality.
2) Encoding seq_view_synthesis_RDO_flag and ratio of rendering quality:
   When the depth image is encoded using the rendering quality, the supplementary information encoding unit 1620 may encode a value of seq_view_synthesis_RDO_flag to "1" and may also encode the ratio of the rendering quality.
3) Encoding seq_view_synthesis_RDO_flag, ratio of rendering quality, and ratio of depth quality:
   When the depth image is encoded using the rendering quality, the supplementary information encoding unit 1620 may encode a value of seq_view_synthesis_RDO_flag to "1" and may also encode the ratio of the rendering quality and the ratio of the depth quality.
4) Encoding ratio of rendering quality and ratio of depth quality:
   When the 3D video is encoded not using the rendering quality, the supplementary information encoding unit 1620 may encode the ratio of the rendering quality to "zero". When the ratio of the rendering quality is zero, the decoding apparatus may estimate that the 3D video is encoded not using the rendering quality.

FIG. 17 illustrates a configuration of a decoding apparatus for decoding a 3D video based on information about a depth image of the 3D video. For example, in decoding a depth image of a 3D video, decoding may be based on information about whether the depth image is encoded based on a rendering quality according to an embodiment.

Referring to FIG. 17, the decoding apparatus 1700 may include a receiving unit 1710 and a decoding unit 1720.

The receiving unit 1710 may receive, from an encoding apparatus, a 3D video of which a depth image is encoded. Also, the receiving unit 1710 may receive information about whether the depth image is encoded based on a rendering quality in encoding the depth image of the 3D video.

The decoding unit 1720 may decode the 3D video of which the depth image is encoded based on information about whether the depth image is encoded based on the rendering quality.

According to an aspect, when the depth image is encoded based on the rendering quality, the decoding unit 1720 may decode the 3D video based on the rendering quality of the depth image.

According to an aspect, based on whether the depth image is encoded based on the rendering quality, the depth quality and the rendering quality of the depth image may be encoded using various methods as shown, for example, in Table 6 and Table 7.

According to another aspect, when the depth image is encoded not using the rendering quality, the decoding unit 1720 may decode the 3D video based on the depth quality of the depth image.

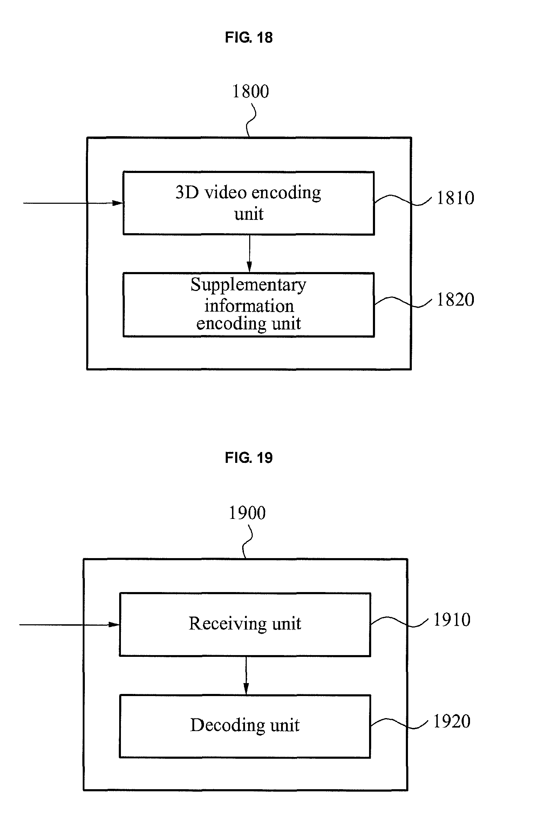

FIG. 18 illustrates a configuration of an encoding apparatus 1800 for encoding information about a distance between a plurality of cameras according to an embodiment.

A multi-view image may include consecutive stereo images. Accordingly, a 3D effect of a 3D video may depend on a 3D effect of each sub-stereo image.

The multi-view image may be further accessible to a plurality of views compared to a stereo image and thus, may provide a further effective and vivid image.

In general, perception of depth in the 3D video may differ based on a distance between a stereo image and each camera. For example, when the 3D video is acquired using two cameras, perception of depth may be further enhanced in the acquired image as a distance between the cameras increases.

Accordingly, the encoding apparatus 1800 may encode information about a distance between cameras used to acquire two stereo images constituting the 3D video, together with the 3D video.

According to an aspect, a 3D video encoding unit 1810 may encode the 3D video acquired using a plurality of cameras, and a supplementary information encoding unit 1820 may encode information about a distance between the plurality of cameras. Here, information about the distance between the plurality of cameras encoded by the supplementary information encoding unit 1820 may include information about the number of cameras. Also, information about the distance between the plurality of cameras may include information about a distance between two cameras that are selected from among the plurality of cameras. For example, the distance between the two cameras may be obtained based on positions of the cameras using coordinate values associated with each respective camera.

According to an aspect, the supplementary information encoding unit 1820 may encode information about the distance between the plurality of cameras as shown in Table 8:

**[Table 8]**

| 3dv_interaxial(payload) { | | | | C | Descriptor |
|---|---|---|---|---|---|
| | | | ... | | |
| | | | **max_interaxial** | 5 | ue(v) |
| | if(max_nteraxial) | | | | |
| | | **interaxial_value** | | 5 | ue(v) |
| | | | ... | | |
| } | | | | | |

Here, max_interaxial indicates information about the number of cameras used to acquire the 3D video, and may be defined, for example, as a value obtained by subtracting "1" from the total number of cameras. Also, interaxial_value may indicate a distance between cameras. According to an aspect, a value obtained by dividing a section up to max_interaxial by the number of cameras or a predetermined value may be defined, for example, as a unit distance. In general, the predetermined value is a value greater than the number of cameras and may be set to, for example, "1024". That is, the unit distance may be equal to the distance between the cameras or may be significantly smaller than the distance between the cameras.

For example, in a case in which max_interaxial is "7" the total number of cameras is "8". Thus, if the unit distance is equal to the distance between the cameras, there may be seven sections, one section between each of the eight cameras. Thus, if interaxial_value = 0, it may indicate a position of a number 0 camera, if interaxial_value = 1, it may indicate a position of a number 1 camera, and so on.

Also, in a case in which the unit distance is defined as a value obtained by dividing the section up to max_interaxial by "1024" a value significantly smaller than the distance between the cameras may be obtained. For example, if interaxial_value = 1, it may indicate 1/(7 x (distance between cameras) x 1024).

When the supplementary information encoding unit 1820 encodes information about the distance between the plurality of cameras as shown in Table 7, the decoding apparatus may provide an adaptable 3D effect based on information about the distance between the plurality of cameras.

FIG. 19 illustrates a configuration of a decoding apparatus 1900 for decoding a 3D video based on information about a distance between a plurality of cameras according to an embodiment.

Referring to FIG. 19, the decoding apparatus 1900 may include a receiving unit 1910 and a decoding unit 1920.

The receiving unit 1910 may receive the 3D video acquired using a plurality of cameras. According to an aspect, the receiving unit 1910 may receive information about a distance between the plurality of cameras used to acquire the 3D video.

The decoding unit 1920 may decode the 3D video based on information about the distance between the plurality of cameras. According to an aspect, the decoding unit 1920 may provide an adaptive 3D effect based on the distance between the plurality of cameras used to acquire the 3D video.

For example, it is assumed that a multi-view image is acquired using 1024 cameras. Compared to viewing, as a stereo, an image acquired using a number 0 camera and a number 1 camera that are adjacent to each other, viewing, as a stereo, an image acquired using the number 0 camera and a number 3 camera may provide a further enhanced 3D effect.

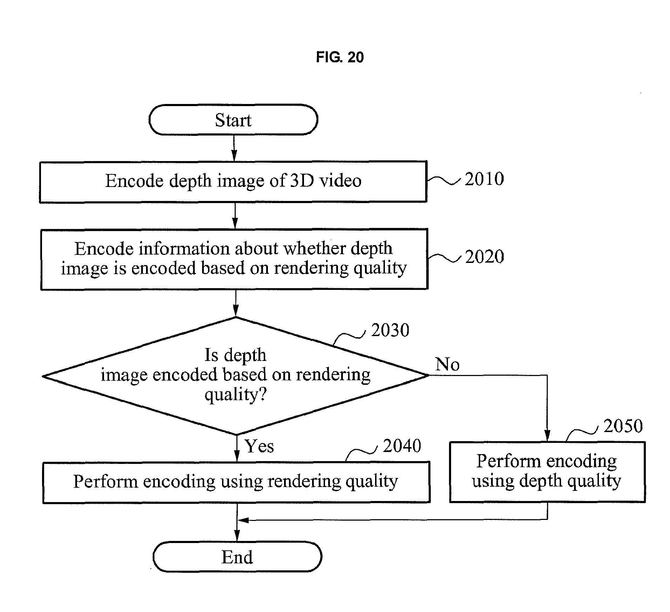

FIG. 20 illustrates an encoding method of encoding information about whether a 3D video is encoded based on a rendering quality according to an embodiment.

In operation 2010, an encoding apparatus may encode a depth image of a 3D video. According to an aspect, the encoding apparatus may encode the depth image based on a rendering quality of the depth image.

When the depth image is encoded based on the rendering quality, a depth value may be accurate and the encoded depth image may maintain a quality level that does not affect synthesis of a virtual image.

In operation 2020, the encoding apparatus may encode information about whether the depth image is encoded based on the rendering quality.

In operation 2030, the encoding apparatus may determine whether the depth image is encoded based on the rendering quality in operation 2010.

When the depth image is determined to be encoded based on the rendering quality in operation 2030, the encoding apparatus may encode the rendering quality of the depth image and thereby transmit the encoded rendering quality to a decoding apparatus in operation 2040. For example, the encoding apparatus may encode a ratio between a depth quality of the depth image and the rendering quality of the depth image to thereby transmit the encoded ratio to the decoding apparatus. In this case, the depth image may be decoded based on the depth quality and the rendering quality by the decoding apparatus.

On the contrary, when the depth image is determined to be encoded not using the rendering quality in operation 2030, the encoding apparatus may encode only the depth quality to thereby transmit the encoded depth quality to the decoding apparatus in operation 2050. In this case, the depth image may be decoded based on the depth quality by the decoding apparatus.

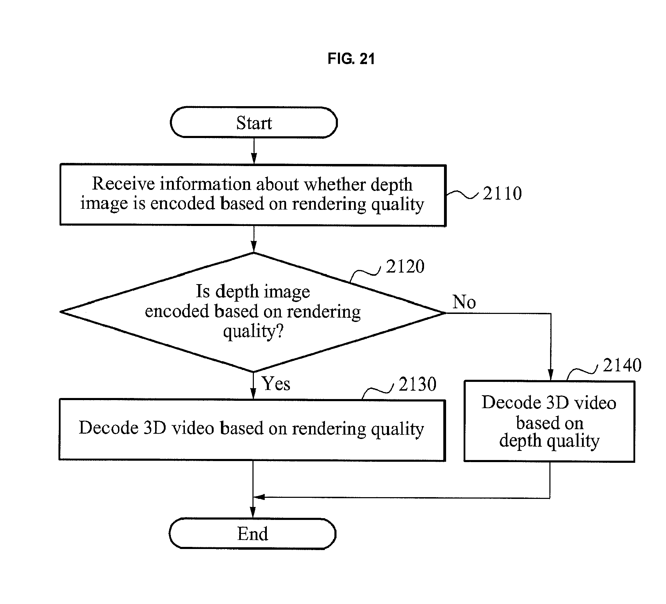

FIG. 21 illustrates a decoding method of decoding a 3D video based on information about a depth image of a 3D video. For example, the decoding of the depth image of the 3D video may be based on information about whether the depth image is encoded based on a rendering quality according to an embodiment.

In operation 2110, a decoding apparatus may receive, from an encoding apparatus, a 3D video of which a depth image is encoded. In operation 2110, the decoding apparatus may receive, from the encoding apparatus, information about whether the depth image is encoded based on the rendering quality.

In operation 2120, the decoding apparatus may determine whether the depth image is encoded based on the rendering quality.

When the depth image is determined to be encoded based on the rendering quality in operation 2120, the decoding apparatus may decode the depth image based on the rendering quality in operation 2130. For example, in operation 2130, the decoding apparatus may calculate a value of the rendering quality from a ratio between the depth quality and the rendering quality, and may decode the 3D video based on the calculated value of the rendering quality. According to an aspect, based on the assumption that the value of the depth quality is "1", only the value of the rendering quality may be encoded and the ratio between the depth quality and the rendering quality may be encoded.

On the contrary, when the depth image is determined to be encoded not using the rendering quality in operation 2130, the decoding apparatus may decode the 3D video based on the depth quality in operation 2140.

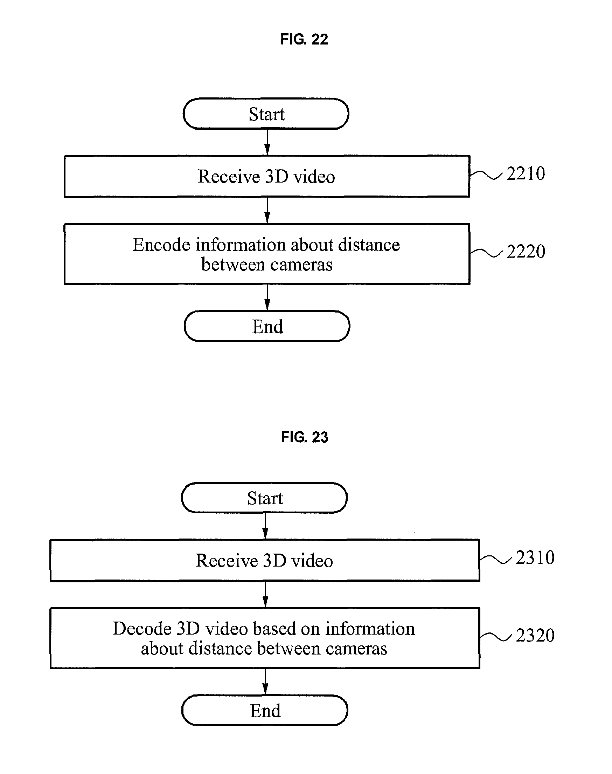

FIG. 22 illustrates an encoding method of encoding information about a distance between a plurality of cameras according to an embodiment.

In operation 2210, an encoding apparatus may receive a 3D video acquired using a plurality of cameras. A multi-view image acquired using the plurality of cameras may include consecutive stereo images. Accordingly, compared to a general stereo image, the multi-view image may provide a further enhanced 3D effect.

In general, perception of depth in the 3D video may differ based on a distance between a stereo image and each camera. For example, when the 3D video is acquired using two cameras, perception of depth may be further enhanced in the acquired image as a distance between the cameras increases.

Accordingly, in operation 2220, the encoding apparatus may encode information about a distance between cameras. Here, information about the distance between the cameras to be encoded may include information about the number of cameras used to acquire a multi-view image, and may include information about a distance between two cameras that are selected from among the plurality of cameras. According to an aspect, information about the distance between the cameras may be encoded as shown in Table 7.

FIG. 23 illustrates a decoding method of decoding a 3D video based on information about a distance between a plurality of cameras according to an embodiment.

In operation 2310, a decoding apparatus may receive the 3D video acquired using the plurality of cameras. According to an aspect, the decoding apparatus may receive information about a distance between the plurality of cameras used to acquire the 3D video.

In operation 2320, the decoding apparatus may decode the 3D video based on information about the distance between the plurality of cameras. According to an aspect, the decoding apparatus may provide an adaptive 3D effect based on the distance between the plurality of cameras used to acquire the 3D video.

For example, it is assumed that a multi-view image may be acquired using 1024 cameras. Compared to viewing, as a stereo, an image acquired using a number 0 camera and a number 1 camera that are adjacent to each other, viewing, as a stereo, an image acquired using the number 0 camera and a number 3 camera may provide a further enhanced 3D effect.

The apparatuses and methods for performing encoding and/or decoding of supplementary information of a 3D video according to the above-described example embodiments may be carried out separately or in combination. For ease of illustration and explanation, some embodiments disclosed herein may have been described separately. However, it will be apparent to those of ordinary skill in the art that the above-described example embodiments may be carried out separately or in combination within an encoding or decoding apparatus. For example, an encoding apparatus may function to encode supplementary information of a 3D video, encode update information, encode information about positions and directions of cameras, encode information about another camera parameter used to encode a camera parameter in the case of predictive encoding, encode information about whether a 3D video is encoded based on a rendering quality, and encode information about a distance between a plurality of cameras.

Likewise, a decoding apparatus may receive the above-mentioned encoded information and may function to decode supplementary information of a 3D video, decode update information, decode information about positions and directions of cameras, decode information about another camera parameter used to encode a camera parameter in the case of predictive encoding, decode information about whether a 3D video is encoded based on a rendering quality, and decode information about a distance between a plurality of cameras.

The apparatus and methods for performing encoding and/or decoding of supplementary information of a 3D video according to the above-described example embodiments may use one or more processors, which may include a microprocessor, central processing unit (CPU), digital signal processor (DSP), or application-specific integrated circuit (ASIC), as well as portions or combinations of these and other processing devices.

Each of the above-mentioned tables (e.g., Tables 1-8) or variations thereof, may be stored in a storage of the encoding apparatus and/or decoding apparatus as appropriate. Default values corresponding to parameters may also be stored the storage, for example. Default values may be set by a user or may be predetermined values. The storage may be embodied as a non-transitory computer readable medium, including hard disks, floppy disks, flash memory or memory cards (e.g., a USB drive), or optical media such as CD ROM discs and DVDs.

The terms "module", and "unit," as used herein, may refer to, but are not limited to, a software or hardware component or device, such as a Field Programmable Gate Array (FPGA) or Application Specific Integrated Circuit (ASIC), which performs certain tasks. A module or unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

The methods for performing encoding and/or decoding of supplementary information of a 3D video according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. The methods for performing encoding and/or decoding of supplementary information of a 3D video according to the above-described embodiments may be performed over a wired or wireless network.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Although example embodiments have been shown and described, it would be appreciated by those skilled in the art that changes may be made to these embodiments without departing from the principles and spirit of the disclosure, the scope of which is defined by the claims and their equivalents.

## Claims

1. An encoding apparatus to encode supplementary information of a three-dimensional (3D) video, the encoding apparatus comprising:
a camera information receiving unit to receive camera information;
a depth range receiving unit to receive depth range information;
an encoding determining unit to determine whether an updated parameter among parameters included in the camera information and parameters included in the depth range information is a parameter to be encoded, and to generate update information based upon the determination; and
an encoding unit to encode the update information and the parameter to be encoded.

2. The encoding apparatus of claim 1, wherein:
the encoding determining unit determines all of the parameters included in the camera information and all of the parameters included in the depth range information are parameters are to be encoded when a first frame among a plurality of frames is to be transmitted by the encoding apparatus, and
the encoding unit encodes the parameters to be encoded without using the update information, when transmitting the first frame.

3. The encoding apparatus of claim 1, wherein:
the encoding determining unit determines all of the parameters included in the camera information and all of the parameters included in the depth range information are parameters are to be encoded when a frame to be transmitted by the encoding apparatus is a frame transmitted at predetermined intervals to provide a random access service, and
the encoding unit encodes the parameters to be encoded without using the update information when transmitting the frame at the predetermined interval to provide the random access service.

4. The encoding apparatus of claim 1, wherein the encoding determining unit determines whether an update is performed with respect to each of the parameters included in the camera information and each of the parameters included in the depth range information, to determine whether to encode each of the parameters.

5. The encoding apparatus of claim 4, wherein the encoding determining unit generates the update information indicating whether an update is performed for each of the parameters included in the camera information and each of the parameters included in the depth range information.

6. The encoding apparatus of any of claims 1-5, wherein the encoding determining unit groups, into predetermined groups, the parameters included in the camera information and the parameters included in the depth range information, determines whether an update is performed with respect to at least one of the parameters included in the groups, and determines to encode all of the parameters included in a group if at least one parameter from the group is an updated parameter.

7. The encoding apparatus of claim 6, wherein the encoding determining unit generates the update information indicating whether an update is performed for each of the groups.

8. The encoding apparatus of any of claims 1-7, further comprising:
a focal length receiving unit to receive focal length information; and
a supplemental enhancement information (SEI) encoding determining unit to determine encoding is required when the focal length information is updated,
wherein the encoding unit encodes the updated focal length information.

9. The encoding apparatus of claim 8, wherein:
the SEI encoding determining unit determines encoding of the focal length information is required when a first frame among a plurality of frames is to be transmitted by the encoding apparatus, and
the encoding unit encodes the focal length information, when transmitting the first frame.

10. The encoding apparatus of claim 8 or 9, wherein:
the SEI encoding determining unit determines encoding of the focal length information is required when a frame to be transmitted is a frame transmitted at predetermined intervals to provide a random access service, and
the encoding unit encodes the focal length information when transmitting the frame at the predetermined interval to provide the random access service.

11. The encoding apparatus of claim 1, wherein the camera information includes at least one of an intrinsic parameter, a rotation parameter, or a translation parameter, and
the depth range information includes a maximum depth value and a minimum depth value.

12. A decoding apparatus to decode supplementary information of a three-dimensional (3D) video, the decoding apparatus comprising:
a decoding unit to decode encoded supplementary information;
a supplementary information classifying unit to classify the decoded supplementary information as an updated parameter included in camera information or as an updated parameter included in depth range information, when update information is included in the encoded supplementary information;
a storage unit to store latest supplementary information; and
a supplementary information reconfiguring unit to store the updated parameter in the storage unit, and to determine a parameter not updated, preferably to decode the information from the encoding apparatus configured according to any of claims 1-11.

13. A method of encoding supplementary information of a three-dimensional (3D) video acquired using a plurality of cameras, the method comprising:
receiving camera information and depth range information;
determining whether at least one updated parameter among parameters included in the camera information and parameters included in the depth range information, is a parameter to be encoded;
generating update information based upon the determination; and
encoding the update information and the parameter to be encoded, preferably using an apparatus according to any of claims 1-12.

14. A method of decoding supplementary information of a three-dimensional (3D) video acquired using a plurality of cameras, the method comprising:
decoding encoded supplementary information;
classifying the decoded supplementary information as an updated parameter included in camera information or as an updated parameter included in depth range information, when update information is included in the encoded supplementary information; and
storing the updated parameter in a storage unit, and determining a parameter value for a parameter which is not updated.

15. An encoding apparatus to encode supplementary information of a three-dimensional (3D) video acquired using a plurality of cameras, the encoding apparatus comprising:
a camera information receiving unit to receive camera information;
a depth range receiving unit to receive depth range information;
an encoding determining unit to selectively determine whether to encode parameters included in the camera information and parameters included in the depth range information; and
an encoding unit to selectively encode the parameters to be encoded,
wherein the encoding determining unit selectively determines to encode at least one parameter included in the camera information or at least one parameter included in the depth range information if a respective parameter included in the camera information or the depth range information is updated, and
wherein the encoding unit selectively encodes information of the updated parameter by omitting camera information according to positions and directions of the plurality of cameras.
